# EUROPEAN PATENT APPLICATION

(11) **EP 3 868 730 A1**
(43) Date of publication of application: **25.08.2021**
(21) Application number: 20158039.6
(22) Date of filing: 18.02.2020
(51) Int. Cl.: C04B 28/04, C04B 28/06, C04B 40/00, C04B 103/12, C04B 111/00, C04B 111/10

(54) **ACCELERATOR FOR MINERAL BINDER COMPOSITIONS**

(71) Applicant: SIKA TECHNOLOGY AG, 6340 Baar (CH)
(72) Inventor: Hauguel, Lolita, 8051 Zürich (CH); Bourquin, Raphael, 8617 Mönchaltorf (CH); Liard, Maxime, 8050 Zürich (CH); Lootens, Didier, 8700 Küsnacht (CH)
(74) Representative: Sika Patent Attorneys

(57) **Abstract**

The invention relates to an accelerator for mineral binder compositions, especially for mortars or concrete, comprising
a) aluminium sulfate,
b) at least one pozzolane,
c) optionally at least one defoamer, and
d) water.

The accelerator is particularly useful for shotcrete, in the field of free-forming construction, or for additive manufacturing.

## Description

### Technical Field

The invention relates to an accelerator for mineral binder compositions, especially for mortars or concrete. The accelerator is particularly useful for shotcrete, in the field of free-forming construction, or for additive manufacturing.

### Background of the invention

Many substances are known to accelerate the solidification and hardening of mineral binder compositions. For example, strongly alkaline reacting substances such as alkali hydroxides, alkali carbonates, alkali silicates, alkali aluminates and alkaline earth chlorides are known. In the case of substances with a strong alkaline reaction, however, EHS problems may occur when handling such substances, and they reduce the final strength and durability of the hydrated product, e.g. concrete.

Accelerators based on aluminium sulfate have proven to be particularly effective. The problem with such accelerators, however, is that the viscosities of the accelerators strongly increase with increasing active substance content. This makes it difficult, among other things, to meter the accelerators precisely and to mix them with the mineral binder compositions to be accelerated. Therefore, accelerators based on aluminium sulfate do contain a substantial amount of water which lowers the final strength of the hydrated product, e.g. concrete.

EP 1 878 713 A1 (Construction Research and Technology GmbH) describes an accelerator for shotcrete or shotcrete mortar with high content of active substances in the form of an aqueous dispersion containing 25 to 40 % by weight of aluminium sulfate and aluminium hydroxide. The molar ratio of aluminium to sulfate is from 0.7 to 1.35. A disadvantage of such accelerators, however, is that additional aluminium hydroxide must be added to achieve the high active substance content and the ratio of aluminium to sulfate must be increased, which is partly undesirable. This means that the costs for the accelerator are relatively high, as aluminium hydroxide is expensive. The accelerator is typically added with 5 - 10 wt.-% relative to the weight of cement, meaning that additional water is added therewith in up to 7.5 wt.-% relative to the weight of cement.

KR 100 923 740 (Korea Inst Construction Tech) describes a shotcrete accelerator comprising among others 5 - 15 wt.-% of metakaolin, 30 - 40 wt.-% of aluminium sulfate, and 3 - 10 wt.-% of aluminium hydroxide. However, these accelerators lead to a significantly increased shrinkage as compared to a reference mortar without added accelerator.

There is thus still a need for improved accelerators for mineral binder compositions which may overcome the disadvantages mentioned above.

### Summary of the invention

It is an objective of the present invention to provide improved accelerators for mineral binder compositions. The accelerators should be based on aluminium sulfate suspensions but should be less problematic in terms of additional water added to the mineral binder compositions.

It was surprisingly found that this objective can be met by an accelerator composition as claimed in claim 1. In a first aspect the present invention thus relates to an accelerator composition for mineral binder compositions comprising
a) 5-16 wt.-%, preferably 7-15 wt.-%, more preferably 8-12 wt.-% of aluminium sulfate,
b) 16 - 65 wt.-%, preferably 20 - 55 wt.-%, especially 25 - 45 wt.-% of at least one pozzolane,
c) optionally at least one defoamer, and
d) at least 30 wt.-%, preferably at least 40 wt.-%, more preferably at least 50 wt.-% of water.

The accelerator composition of the present invention has the advantage that it increases the early strength of a mineral binder composition as compared to the same mineral binder composition without added accelerator. At the same time the final strength of a mineral binder composition comprising the accelerator composition of the present invention is much less affected, especially not significantly decreased, as compared to the same mineral binder composition with a conventional accelerator based on aluminium sulfate added. In particular, the increase in early strength achieved with an accelerator composition of the present invention is similar to the increase achieved with commercially available accelerators based on aluminium sulfate while the reduction in final strength is much lower.

It is another advantage of an accelerator composition of the present invention that it reduces the shrinkage of a mineral binder composition upon curing as compared to conventional accelerators based on aluminium sulfate. Reduced shrinkage is an advantage as shrinkage frequently leads to cracks in the cured mineral binder composition and thus lowers its durability.

Furthermore, problematic and/or expensive substances such as alkali compounds or carboxylic acids can be avoided in an accelerator of the present invention if required. This is possible without significant losses in terms of the acceleration effect.

Further aspects of the invention are subject to further independent claims. Particularly preferred embodiments of the invention are the subject of the dependent claims.

### Ways of carrying out the invention

In a first aspect the present invention relates to an accelerator composition for mineral binder compositions comprising
a) 5-16 wt.-%, preferably 7-15 wt.-%, more preferably 8-12 wt.-% of aluminium sulfate,
b) 16 - 65 wt.-%, preferably 20 - 55 wt.-%, especially 25 - 45 wt.-% of at least one pozzolane,
c) optionally at least one defoamer, and
d) at least 30 wt.-%, preferably at least 40 wt.-%, more preferably at least 50 wt.-% of water.

The accelerator composition is in particular an accelerator for the setting and/or the hardening of a mineral binder composition.

The term "accelerator for the setting and/or the hardening" refers in particular to an additive for mineral binder compositions which will shorten the time after addition of water to said mineral binder composition and until a given level of compressive strength and/or flexural strength is reached as compared to a reference without any such additive added. In particular, within the context of the present invention, the compressive strength and/or flexural strength of a mineral binder composition with added accelerator is increased after 1 minute to 24 hours after mixing with water as compared to a reference without accelerator added.

Within the context of the present invention, the compressive strength and/or flexural strength of a hardened mineral binder composition measured within 1 minute to 24 hours after mixing of a mineral binder composition with water is also referred to as early strength. The compressive and/or flexural strength of a hardened mineral binder composition measured after 28d after mixing of a mineral binder composition with water is also referred to as final strength.

An accelerator composition of the present invention thus preferably is an early strength accelerator for mineral binder compositions.

Within the context of the present invention a "mineral binder composition" is a composition comprising at least one mineral binder. The term "mineral binder" refers in particular to a binder which reacts in the presence of water in a hydration reaction to form solid hydrates or hydrate phases. This can be a hydraulic binder (e.g. cement or mineral lime), or a non-hydraulic binder (e.g. white lime).

Examples of mineral binders whose hardening and/or setting can be accelerated by an accelerator composition according to the present invention are cements such as Portland cement, blended cements, calcium aluminate cements, calcium sulphoaluminate cements, lime and/or mineral lime.

In particular, the mineral binder or binder composition comprises a hydraulic binder, especially cement. A cement with a cement clinker content of > 35 wt.-% is particularly preferred. The cement is preferably chosen from at least one cement of the group consisting of CEM I, II, III, IV or V (according to standard EN 197-1), calcium aluminate cement (according to the standard EN 14647:2006-01), and calcium sulphoaluminate (CSA) cement. A CSA cement within the present context is a cement with a main phase consisting of C₄(A₃₋ₓFₓ)₃$ (4 CaO · 3-x Al₂O₃ · x Fe₂O₃ · CaSO₄) where x is an integer of from 0 - 3 . CSA cements of the present invention typically comprise further phases selected from aluminates (CA, C₃A, C₁₂A₇), belite (C₂S), ferrites (C₂F, C₂AF, C₄AF), ternesite (C₅S₂$) and anhydrite. In the present context C stands for CaO, A stands for Al₂O₃, F stands for Fe₂O₃, and $ stands for CaSO₄. According to certain embodiments CSA cements of the present invention comprise 20-75 wt.-%, preferably 25-50 wt.-% C₄A₃$, 0-10 wt.-%, preferably 1-5 wt.-% aluminates, 0-70 wt.-%, preferably 1-50 wt.-% belite, 0-35 wt.-%, preferably 1-10 wt.-% ferrites, 0-20 wt.-%, preferably 1-10 wt.-% ternesite, 0-50 wt.-%, preferably 5-45 wt.-% anhydrite, and 0-25 wt.-% CaO, preferably 1-20 wt.-% CaO, each based on the total dry weight of the CSA cement.

In particular, the mineral binder comprises or consists of a cement of the type CEM I, CEM II, calcium sulphoaluminate cement or a mixture thereof. Of course, cements produced according to relevant alternative standards, for example the relevant ASTM or Chinese standards, are likewise suitable. Furthermore, white cement can be used as a mineral binder of the present invention. A proportion of the hydraulic binder in the total mineral binder is advantageously at least 5 wt.-%, in particular at least 20 wt.-%, preferably at least 35 wt.-%, in particular at least 65 wt.-%. According to a further advantageous embodiment, the mineral binder consists to at least 95% by weight of hydraulic binder, in particular cement.

In particularly preferred embodiments, a mixture of CEM I and calcium sulphoaluminate cement is used as the mineral binder. In such cases, the weight ratio of CEM I to calcium sulphoaluminate cement in the mineral binder is from 25:1 to 1:1, preferably 20:1 to 10:1, especially 16:1 to 12:1. A particularly suitable calcium sulphoaluminate cement is available from Denka Kagaku Kogyo.

However, it may also be advantageous if the mineral binder or mineral binder composition comprises other binders in addition to or instead of a hydraulic binder. These are in particular latent hydraulic binders and/or pozzolanic binders. Suitable latent hydraulic and/or pozzolanic binders are e.g. slag, fly ash and/or silica dust. According to embodiments, the mineral binder comprises 1 - 95 wt.-%, preferably 2 - 65 wt.-%, in particular 15 - 35 wt.-%, each based on the total dry weight of the mineral binder, of latent hydraulic and/or pozzolanic binders.

Calcium sulfate may be added to a mineral binder composition of the present invention in small amounts to compensate for the loss of sulfate during hydration. Small amounts means 0.1 - 5 wt.-%, preferably 0.1 - 1.5 wt.-% of calcium sulfate, based on the total weight of the mineral binder. Calcium sulfate may be interground with the cement to form a hydraulic binder.

The mineral binder composition may also comprise inert substances such as limestone flour, quartz flour and/or pigments.

It can be likewise advantageous if the mineral binder is free of latent hydraulic and/or pozzolanic material, especially free of pozzolanic material. In this case no latent hydraulic material and/or pozzolane is comprised in a mineral binder composition. "Free of" means that the amount of latent hydraulic material and/or pozzolane is < 1 wt.-%, preferably < 0.5 wt.-%, especially <0.1 wt.-%, each based on the total weight of the mineral binder composition.

Preferably, an accelerator composition of the present invention is in the form of a liquid suspension. Such a suspension is a heterogeneous mixture of water and finely divided particles of aluminium sulfate and pozzolane. In addition to the aluminium sulfate in particle form, part of the aluminium sulfate may also be present in dissolved and/or chemically converted form. Jurbanite (Al(OH)SO₄ · 5 H₂O) is one example of a chemically converted form of aluminium sulfate. In addition to the water, the aluminium sulfate, and the pozzolane, the accelerator suspension may comprise further constituents which may be present in dissolved and/or dispersed form. A defoamer is a particularly preferred further constituent.

According to a preferred embodiment, the viscosity of an accelerator composition of the present invention, which is in the form of a liquid suspension, is higher than 500 mPa·s, preferably higher than 1'000 mPa·s. At a lower viscosity of the accelerator composition there is a risk of increased sedimentation and thus lower shelf life. The upper limit for the viscosity of the present invention is less important. However, for practical applications it is preferred that the viscosity is not higher than 500 Pa·s, especially not higher than 200 Pa·s. All viscosities herein refer to values measured at a shear rate of 1 s⁻¹ on an Anton-Paar rheometer (Physica MCR 301) at 23 °C. As measuring head a double helix with 20 mm diameter and 20 mm length is used in a container of 23 mm diameter and 54 mm depth, leading to a relevant gap at the circumference of 1.5 mm.

According to an advantageous embodiment, the accelerator composition of the present invention comprises, based on the total weight of the accelerator composition, 5 - 16 wt.-%, in particular 7 - 15 wt.-%, preferably 8 - 12 wt.-% of aluminium sulfate (Al₂(SO₄)₃). The quantities of aluminium sulfate refer to Al₂(SO₄)₃ without water of crystallization throughout this document.

Based on the total weight of the accelerator composition, the accelerator composition preferably has a proportion of sulfate (SO₄²⁻) of 4 - 14 wt.-%, preferably 5.5 - 13 wt.-%, in particular 6.5 - 10 wt.-%, based on the total weight of the accelerator composition.

Based on the total weight of the accelerator composition, the accelerator composition preferably has a proportion of aluminium (Al³⁺) of 0.8 - 4 wt.-%, preferably 1.1 - 3 wt.-%, in particular 1.5 - 2.5 wt.-%, based on the total weight of the accelerator composition.

The sulfate of the aluminium sulfate in an accelerator composition of the present invention comes in particular from aluminium sulfate, aluminium hydroxysulfate and/or sulfuric acid. Aluminium sulfate is particularly preferred. In other words, the accelerator is preferably produced with at least one of these substances as a source of sulfate.

The aluminium of the accelerator is advantageously derived from aluminium sulfate, aluminium hydroxysulfate, aluminium hydroxide and/or aluminium hydroxide carbonate. Aluminium sulfate is particularly preferred. In other words, the accelerator is preferably produced with at least one of these substances as a source of aluminium.

The aluminium sulfate which can be used for production of an accelerator of the present invention may contain different amounts of water of crystallization. The aluminium sulfate typically used is aluminium sulfate tetradecahydrate (Al₂(SO₄)₃. 14.3 H₂O). It is also commonly referred to as 17% aluminium sulfate because it contains 17% Al₂O₃. The aluminium sulfate used for the production of an accelerator of the present invention can be in form of a powder.

According to an especially preferred embodiment of the present invention, the aluminium sulfate used for the production of an accelerator of the present invention is in form of an aqueous solution or an aqueous suspension. Suitable aluminium sulfate solutions are described for example in WO 2006/010407 (examples 1a to 2c as described in the table on p. 6). Suitable aluminium sulfate suspensions are described for example in EP 1 878 713 (e.g. accelerators A and B as described in [0041]) and EP 0 812 812.

According to a further advantageous embodiment, the accelerator composition additionally comprises 0.005 - 5 wt.-%, in particular 0.01 - 3 wt.-%, particularly preferably 0.03 - 1 wt.-%, of aluminium hydroxide, based on the total weight of the accelerator composition.

Thus, the aluminium content can be effectively increased independently of the sulfate content of the accelerator composition.

Aluminium hydroxide can be used in amorphous or crystalline form. It is advantageous to use amorphous aluminium hydroxide. Aluminium hydroxide can also be used in the form of aluminium hydroxide carbonate, aluminium hydroxide sulfate or similar.

In an advantageous embodiment, the molar ratio of aluminium to sulfate in the accelerator composition of the present invention is < 0.7, in particular 2:3. In this case the accelerator composition can be produced in a particularly simple way by using aluminium sulfate (Al₂(SO₄)₃).

According to another embodiment, the molar ratio of aluminium to sulfate in the accelerator composition of the present invention is in the range of 0.5 - 2, preferably 0.67 - 1.35, in particular 0.7 - 1.0. Such molar ratios of aluminium to sulfate exhibit improved efficacy especially in applications where mortar or concrete is sprayed.

A "pozzolane" or "pozzolanic material" within the context of the present invention is a material that has cementitious properties only when activated. This means that pozzolanes do not by themselves form hydrates or hydrate phases but need activation before reacting with water. Typical activators for pozzolanes are strongly alkaline materials such as hydroxides of alkali metals or alkaline earth metals, most preferably calcium hydroxide Ca(OH)₂. When activated, pozzolanes react with water to form hydrates or hydrate phases. Pozzolanes are thus different from the latent hydraulic materials. Latent hydraulic materials can react with water by themselves as they already contain enough CaO. The hydration reaction of latent hydraulic materials typically is very slow so that they are typically also activated.

According to especially preferred embodiments, the at least one pozzolane for an accelerator composition of the present invention is selected from the group consisting of silica fume, fly ash, volcanic tuff, especially trass, diatomaceous earth, rice husk ash, and calcined clays, especially metakaolin. Metakaolin is particularly preferred.

Within the context of the present invention a pozzolane is not selected from any of the group consisting of slag, especially GGBFS, clay minerals, especially phyllosilicates such as montmorillonite, bentonite, and sepiolite. However, bentonite and/or sepiolite may be present in an accelerator composition of the present invention in addition to the components a) to d) as described above.

The at least one pozzolane of the present invention preferably has a particle size from 0.1 - 100 µm, preferably from 0.1 - 50 µm, more preferably from 0.2 - 10 µm. The D50 value of the at least one pozzolane of the present invention preferably is from 0.5 - 20 µm, especially from 1 - 5 µm. The particle size can e.g. be determined by laser diffraction as described in ISO 13320:2009. Preferably, a particle size of non-spherical or irregular particles is represented by the equivalent spherical diameter of a sphere of equivalent volume. Especially, the lower values of the ranges given for the particle size represent D1 values whereas the upper values of the ranges given for the particle size represent D99 values. Put differently, in this case, 1% of the particles have a lower particle size than the lower value of a range, whereas 1% of the particles have a larger particle size than the upper value of a range. The D50 value represents the particle size where 50% of the particles have a lower particle size and 50% have a higher particle size.

Without being wished to be bound by theory it is believed that a smaller particle size D50 of the at least one pozzolane is beneficial as this will lead to a faster activation and a faster reaction with water.

An accelerator of the present invention comprises the at least one pozzolane in an amount of 16 - 65 wt.-%, preferably 20 - 55 wt.-%, especially 25 - 45 wt.-%, each based on the total weight of the accelerator composition.

The accelerator composition of the present invention preferably has a content of water of 30 - 80 wt.-%, in particular 40 - 70 wt.-%, preferably 50 - 65 wt.-%, each based on the total weight of the accelerator composition. Water of crystallization of the components of the aluminium sulfate suspension, e.g. water of crystallization of aluminium sulfate, is included here.

Water can be any water available such as distilled water, purified water, tap water, mineral water, spring water, and well water. The use of waste water is possible only in cases where the composition of such waste water is known and where none of the impurities comprised may impart the functionality of any other component of the composition of the present invention. The use of salt water is not possible due to its high content of chlorides and the risk of corrosion of steel reinforcement associated therewith.

The accelerator composition of the present invention preferably is free of alkali metals and/or chloride. Within the present context, alkali-free means a composition which contains less than 1% by weight of alkali metal and/or alkali metal ions, based on the total weight of the composition. Chloride-free, within the present context, means a composition which has less than 0.1% by weight of chloride ions, based on the total weight of the composition.

The accelerator composition of the present invention optionally comprises at least one defoamer. The defoamer may be selected from the list consisting of oil based defoamers, especially mineral oil, vegetable oil, or white oil based defoamers which may comprise a wax and/or hydrophobic silica, silicone based defoamers, which can be modified by, for example, alkoxylation or fluorination, alkyl esters of phosphoric or phosphonic acid, alkoxylated polyols, especially ethoxylated diols, fatty acid based defoamers, especially mono- and diglycerides of fatty acids, alkoxylated fatty alcohols or mixtures thereof. An especially preferred class of defoamers are gemini surfactants. A gemini surfactant typically has two hydrophilic head groups which are joined by a spacer and which typically each bear a hydrophobic tail. Gemini surfactants are described in more detail for example in chapter 4 ("Multifunctional Gemini Surfactants: Structure, Synthesis, Properties, And Applications") of the book "Application and Characterization of Surfactants", edited by R. Najjar, published 5.7.2017 by IntechOpen. Especially preferred gemini surfactants within the present context are substituted alkines. According to an especially preferred embodiment, an accelerator of the present invention comprises at least one defoamer which is selected from ethoxylated 2,4,7,9-tetramethyl-5-decyn-4,7-diol, a combination of fatty alcohol alkoxylate and polysiloxane, or a combination of a mineral oil and a silicone oil comprising hydrophobic silica.

The at least one defoamers can be used as a liquid or a powder, preferably as a liquid.

If present, the content of the at least one defoamer in the accelerator composition is from 0.1 - 10 wt.-%, preferably 0.5 - 5 wt.-%, especially 1 - 4 wt.-%, each based on the total weight of the accelerator composition.

Suitable defoamers can, for example, be commercially obtained under the brand name Ashland Drew from Ashland, under the brand name Agitan from Münzing Chemie or under the brand name Carbowet from Evonik Industries.

The accelerator composition of the present invention may optionally comprise further substances.

In particular, the accelerator composition may comprise an alkali aluminate and/or an alkaline earth aluminate, most preferably a sodium aluminate and/or a calcium aluminate. An amount of the alkali aluminate and/or the alkaline earth aluminate, in particular the sodium aluminate and/or the calcium aluminate, is preferably a total of 0.001 - 7 wt.-%, in particular 0.1 - 3 wt.-%, in particular 0.2 - 1.5 wt.-%, in each case based on the total weight of the accelerator composition.

Furthermore, at least one further bivalent or higher metal sulfate may be present in an accelerator of the present invention, preferably in an amount of 0.03 - 2 % by weight based on the total weight of the accelerator composition. Manganese(II) sulfate is particularly preferred as a further metal sulfate. Iron sulfate is also suitable.

It can also be advantageous if the accelerator composition of the present invention comprises 0.01 - 5 wt.-%, preferably 0.03 - 2 wt.-%, in particular 0.1 - 1 wt.-%, each based on the total weight of the accelerator composition, of an alkanolamine. Monoethanolamine, diethanolamine, triethanolamine and/or methyl-diisopropanolamine may advantageously be used as alkanolamine.

The accelerator of the present invention may also comprise a dispersant, in particular a polycarboxylate and/or a polycarboxylate ether, and/or stabilizers, for example cellulose ether, bentonite, Actigel 208, kaolin and/or magnesium silicates, for example sepiolite. In particular, the accelerator composition may contain a magnesium silicate, in particular a layered silicate and/or phyllosilicate, e.g. sepiolite and/or bentonite as stabilizer. If present, a proportion of magnesium silicate is preferably 0.001 - 5 wt.-%, preferably 0.1 - 2 wt.-%, in particular 0.2 - 1 wt.-%, based on the total weight of the accelerator composition. Dispersants and/or stabilizers are suitable to prevent sedimentation of an accelerator composition of the present invention and thus prolong its shelf life. Magnesium silicates are not pozzolanes as understood in the present context.

Of course, the accelerator composition may also comprise other additives. These may in particular be fluorine compounds such as hydrofluoric acid, alkali fluorides and/or fluoro complexes. These make it possible, for example, to further enhance the accelerating effect. Furthermore, the accelerator composition may comprise carboxylic acids in an amount sufficient to stabilize the pH at a value of below 6, most preferably below 4. According to an especially preferred embodiment, the accelerator composition comprises formic acid.

The above-mentioned substances can be found, at least partially, as ions in solution. However, they can also occur, for example, in complexed form or undissolved in the accelerator composition.

A particularly preferred accelerator composition of the present invention thus comprises or consists of (each based on the total weight of the accelerator composition):
a) 7 - 16 wt.-%, preferably 9 - 15 wt.-%, especially 11 - 14 wt.-% of aluminium sulfate,
b) optionally 0.01 - 5 wt.-%, preferably 1 - 5 wt.-% of aluminium hydroxide,
c) 16 - 65 wt.-%, preferably 20 - 55, more preferably 25 - 45 wt.-%, especially 33 wt.-% of at least one pozzolane, preferably of metakaolin,
d) 30 - 80 wt.-%, preferably 30 - 65 wt.-% of water, and
e) 0.5 - 5 wt.-%, preferably 1 - 4 wt.-% of at least one defoamer.

Another particularly preferred accelerator composition of the present invention thus comprises or consists of (each based on the total weight of the accelerator composition):
a) 7 - 16 wt.-%, preferably 9 - 15 wt.-%, especially 11 - 14 wt.-% of aluminium sulfate,
b) 0.01 - 5 wt.-%, preferably 1 - 5 wt.-% of aluminium hydroxide,
c) 16 - 65 wt.-%, preferably 20 - 55, more preferably 25 - 45 wt.-%, especially 33 wt.-% of at least one pozzolane, preferably of metakaolin,
d) 25 - 80 wt.-%, preferably 30 - 65 wt.-% of water,
e) 0.5 - 5 wt.-%, preferably 1 - 4 wt.-% of at least one defoamer, and
f) 0.1 - 5 wt.-%, especially 0.1 - 0.5 wt.-% of sepiolite.

Yet another particularly preferred accelerator composition of the present invention thus comprises or consists of (each based on the total weight of the accelerator composition):
a) 7 - 16 wt.-%, preferably 9 - 15 wt.-%, especially 11 - 14 wt.-% of aluminium sulfate,
b) 0.01 - 5 wt.-%, preferably 1 - 5 wt.-% of aluminium hydroxide,
c) 16 - 65 wt.-%, preferably 20 - 55, more preferably 25 - 45 wt.-%, especially 33 wt.-% of at least one pozzolane, preferably of metakaolin,
d) 25 - 80 wt.-%, preferably 30 - 65 wt.-% of water,
e) 0.5 - 5 wt.-%, preferably 1 - 4 wt.-% of at least one defoamer,
f) 1 - 4 wt.-%, preferably 2 - 4 wt.-% of formic acid,
g) 0.5 - 10 wt.-%, preferably 1 - 7 wt.-% of an alkanolamine, preferably diethanolamine, and
h) 0.1 - 5 wt.-%, especially 0.1 - 0.5 wt.-% of sepiolite.

Still another particularly preferred accelerator composition of the present invention thus comprises or consists of (each based on the total weight of the accelerator composition):
a) 7 - 16 wt.-%, preferably 9 - 15 wt.-%, especially 11 - 14 wt.-% of aluminium sulfate,
b) 0.01 - 5 wt.-%, preferably 1 - 5 wt.-% of aluminium hydroxide,
c) 16 - 65 wt.-%, preferably 20 - 55, more preferably 25 - 45 wt.-%, especially 33 wt.-% of at least one pozzolane, preferably of metakaolin,
d) 25 - 80 wt.-%, preferably 30 - 65 wt.-% of water,
e) 0.5 - 5 wt.-%, preferably 1 - 4 wt.-% of at least one defoamer, and
f) 0.1 - 1 wt.-%, preferably 0.2 - 0.5 wt.-% of a cellulose ether.

In a further aspect the present invention relates to a process for the production of an accelerator composition as described above. In principle, it is possible to mix the individual components of an accelerator of the present invention as described above in any given order. Mixing can be performed by any process or device known to the person skilled in the art. It can be preferred, however, that the at least one pozzolane, the at least one defoamer and additional water are mixed with a preformed aqueous solution or suspension of the other ingredients, in particular of aluminium sulfate, aluminium hydroxide, and optionally carboxylic acid, alkali metal aluminate, magnesium silicate, and/or alkanolamine. By this order of mixing an accelerator with improved shelf life may be obtained. Suitable processes for the preparation of aqueous solutions of aluminium sulfate are described, for example, in WO 2006/010407. Suitable processes for the preparation of aqueous suspensions of aluminium sulfate are described, for example, in EP 1 878 713 and EP 0 812 812.

The accelerator compositions of the present invention can be used to accelerate the setting and/or hardening of mineral binder compositions. Mineral binder compositions start to react in hydration reactions to form solid hydrates or hydrate phases after the addition of mixing water. An accelerator of the present invention can thus be used to accelerate the setting and/or hardening of mineral binder compositions after the addition of mixing water. In another aspect the present invention thus relates to a process for the acceleration of a mineral binder composition, comprising the steps of mixing a mineral binder composition with
a) an accelerator composition as descriebd above, and
b) water
   in any given order.

Mineral binder compositions are as described above. Such mineral binder compositions are in particular sprayed mortars, sprayed concrete, and/or mortars for additive manufacturing. An accelerator of the present invention may thus be used to accelerate the setting and/or hardening of sprayed mortars, sprayed concrete, and/or mortars for additive manufacturing.

Preferably, the mineral binder composition of the present invention comprises aggregates. Aggregates can be any material that is non-reactive in the hydration reaction of mineral binders. Aggregates can be any aggregate typically used for mineral binder compositions, especially cementitious binder compositions. Typical aggregates are for example rock, crushed stone, gravel, slag, sand, especially silica sand, river sand and/or manufactured sand, recycled concrete, glass, expanded glass, pumice, perlite, vermiculite, and/or fine aggregates such as ground limestone, ground dolomite, ground aluminum oxide, silica fume, quartz flour and/or ground steel slag. Aggregates useful for the present invention can have any shape and size typically encountered for such aggregates.

Preferably, the mineral binder composition of the present invention comprises at least one fine aggregate, especially ground limestone. Aggregates, useful for the present invention, are as described for example in EN 12620:2008-07 and EN13139:2015-07. Aggregates typically are characterized by their particle size distribution which can be measured by sieve analysis as set out in methods ASTM C136 and C117.

The particle size of the aggregates depends on the application and is in the range of 0.1 µm to 32 mm and more. Aggregate with different particle sizes are preferably mixed in order to optimize the properties of the mineral binder composition. It is also possible to use aggregates of different chemical composition.

According to embodiments, aggregates having particle sizes of not more than 8 mm, more preferably not more than 5 mm, still more preferably not more than 3.5 mm, most preferably not more than 2.2 mm, especially not more than 1.2 mm or not more than 1.0 mm are used in a mineral binder composition of the present invention.

The maximum particle size is limited in particular by the planned layer thickness during application of the mineral binder composition mixed with water. For example, a maximum particle size of the aggregate should be the same as the layer thickness during application. This is in particular the case where the mineral binder composition is applied in a method of additive manufacturing.

According to embodiments, the mineral binder composition of the present invention comprises up to 85 wt.-%, preferably 30 - 80 wt.-%, more preferably 40 - 70 wt.-%, each based on the total weight of the mineral binder composition, of aggregates, preferably of sand, especially of silica sand, and/or of a fine carbonate, especially of a fine calcium carbonate and/or magnesium carbonate.

According to embodiments, sand with a particle size of less than 1 mm, preferably less than 0.8 mm is used for a mineral binder composition of the present invention.

According to an especially preferred embodiment, a mineral binder composition of the present invention comprises a mixture of sand, especially of silica sand, and/or of a fine carbonate, especially of a fine calcium carbonate and/or magnesium carbonate, said carbonates having a particle size of less than 0.125 mm. In this case, the aggregates comprise sand and/or fine carbonate in an amount of from 40 - 98 wt.-%, preferably 50 - 95 wt.-%, especially 60 - 90 wt.-% and fine carbonates in an amount of from 2 - 60 wt.-%, preferably 5 - 50 wt.-%, especially 10 - 40 wt.-%, each based on the total dry weight of the aggregate. The fine carbonates improve the processability of the mineral binder composition mixed with water and can increase the strength development of the binder composition.

Mineral binder compositions having particle sizes of this type and mixed with water can be readily conveyed, are readily mixed with an admixture of the present invention in a continuous manner and give a very homogeneous surface after application.

In special applications, aggregates with particle sizes up to 32 mm, more preferably up to 20 mm, most preferably up to 16 mm, can also be used.

A mineral binder composition advantageously further comprises additives common in the mortar and/or concrete industry such as for example plasticizers and/or superplasticizers, air entrainers, stabilizers, viscosity modifiers, water reducers, accelerators, retarders, water resisting agents, strength enhancing additives, fibres, blowing agents, pigments, corrosion inhibitors, etc. It can be advantageous to combine two or more of the mentioned additives in one mineral binder composition.

According to embodiments, the mineral binder compositions comprise or consist of (each based on the total weight of the mineral binder composition)
a) at least one mineral binder selected from the group consisting of Portland cement, blended cements, calcium aluminate cements, calcium sulphoaluminate cements, lime or mixtures thereof in an amount of from 10 - 66 wt.-%, preferably 15 - 50 wt.-%, especially 20 - 45 wt.-%,
b) aggregates, preferably sand, in an amount of from 30 - 80 wt.-%, preferably 40 - 70 wt.-%,
c) fine filler, preferably calcium carbonate, in an amount of from 1 - 25 wt.-%, preferably 2 - 15 wt.-%,
d) optionally a pozzolanic and/or latent hydraulic material in an amount of from 1 - 25 wt.-%, preferably 2 - 10 wt.-%, and
e) optionally, 0.05 - 10 wt.-%, preferably 0.1 - 7 wt.-%, more preferably 0.2 - 5 wt.-% of other additives selected from the group consisting of superplasticizers, retarders, thickeners, pigments, and/or fibers.

According to certain embodiments, the mineral binder composition comprises a combination of two cements as mineral binder. A particularly preferred mineral binder composition thus comprises or consists of (each based on the total weight of the mineral binder composition)
a) Portland cement of type CEM I in an amount of from 10 - 50 wt.-%, preferably 15 - 33 wt.-%, especially 20 - 25 wt.-%,
b) calcium sulphoaluminate cement in an amount of from 0.5 - 16 wt.-%, preferably 1 - 10 wt.-%, especially 1 - 5 wt.-%,
c) aggregates, preferably sand, in an amount of from 30 - 80 wt.-%, preferably 40 - 70 wt.-%,
d) optionally fine filler, preferably calcium carbonate, in an amount of from 1 - 25 wt.-%, preferably 2 - 15 wt.-%,
e) optionally a pozzolanic and/or latent hydraulic material in an amount of from 1 - 25 wt.-%, preferably 2 - 10 wt.-%, and
f) optionally, 0.05 - 10 wt.-%, preferably 0.1 - 7 wt.-%, more preferably 0.2 - 5 wt.-% of other additives selected from the group consisting of superplasticizers, retarders, thickeners, pigments, and/or fibers.

According to further embodiments, the mineral binder composition is free of pozzolanic and/or latent hydraulic materials. A particularly preferred mineral binder composition thus comprises or consists of (each based on the total weight of the mineral binder composition)
a) at least one mineral binder selected from the group consisting of Portland cement, blended cements, calcium aluminate cements, calcium sulphoaluminate cements, lime or mixtures thereof, in an amount of from 10 - 66 wt.-%, preferably 15 - 50 wt.-%, especially 20 - 45 wt.-%,
b) aggregates, preferably sand, in an amount of from 30 - 80 wt.-%, preferably 40 - 70 wt.-%,
c) fine filler, preferably calcium carbonate, in an amount of from 1 - 25 wt.-%, preferably 2 - 15 wt.-%, and
d) optionally, 0.05 - 10 wt.-%, preferably 0.1 - 7 wt.-%, more preferably 0.2 - 5 wt.-% of other additives selected from the group consisting of superplasticizers, retarders, thickeners, pigments, and/or fibers.

The amount of water needed to harden a mineral binder composition of the present invention is 10 - 60 wt.-%, preferably 10 - 50 wt.-%, more preferably 10 - 30 wt.-%, especially 10 - 20 wt.-%, each based on the total dry weight of the mineral binder composition. According to a preferred embodiment, the mineral binder composition comprises water in an amount of from 10 - 30 wt.-%, preferably 10 - 20 wt.-%, each based on the total dry weight of the mineral binder composition.

Water can be any water as described above. Upon mixing with water the mineral binder composition starts to harden.

Methods and devices for mixing a mineral binder composition with the accelerator of the present invention and/or with water are known to the person skilled in the art. It is for example possible to mix the mineral binder composition with the accelerator and/or with water by means of hand held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuously, semi-continuously or batch-wise. Continuous mixing offers the advantage of a high production speed.

According to a particularly preferred embodiment, the process of accelerating a mineral binder composition with an accelerator of the present invention is a continuous process. This means in particular, that conveying, mixing, and application of the mineral binder composition and the accelerator is continuous. Especially, the mixing of the mineral binder composition and the accelerator of the present invention is done continuously. Particularly preferred mixing systems and mixers are static, dynamic or a combination of both.

Mixing systems and mixers which are typically used in shotcrete applications are particularly suitable for use in a process for the acceleration of a mineral binder composition according to the present invention. Such mixing systems and mixers are for example described in DE3114027 and EP2621698. Mixing systems and mixers as described therein have the advantage that they lead to very homogeneous mixing of the accelerator with the mineral binder composition.

Mixing systems and mixers which are typically used in continuous applications are likewise particularly suitable for use in a process for the acceleration of a mineral binder composition according to the present invention. Such mixers are for example described in EP3423178. Mixers as described therein have the advantage that they are particularly easy to handle and are suitable to continuously mix materials with higher viscosity.

In another embodiment of the present invention, a static mixer is used in a process for acceleration of a mineral binder composition with an accelerator composition of the present invention. In a static mixer, mixing elements are arranged in a jacket that provide for a homogeneous intermixing of components by using the flow energy of the components which are fed into the static mixer under pressure. Static mixers are easy to use, cheap and are particularly suited for one-time use which is of advantage, especially for the do-it-yourself market.

According to preferred embodiments, an accelerator of the present invention is used in a process for the acceleration of a mineral binder composition in an amount of from 0.5 - 25 wt.-%, preferably 1 - 15 wt.-%, especially 3 - 10 wt.-%, each based on the total weight of the mineral binder.

According to embodiments an accelerator composition of the present invention is mixed with the dry mix of a mineral binder composition. A "dry mix" within the present context refers to a mineral binder composition with a moisture content of not more than 0.5 wt.-%, based on the total weight of the mineral binder composition. Mixing can be done by any process known to the person skilled in the art for the production of dry mortars. There are no particular limitations as to the order of addition for mixing.

According to further embodiments an accelerator composition of the present invention is mixed with a mineral binder composition together with the mixing water. In such a case it is preferred that the accelerator composition is in the form of an aqueous solution or suspension or is readily soluble or dispersible in the mixing water. The accelerator composition of the present invention can be pre-mixed with part or all of the mixing water and then mixed with the mineral binder composition. It may likewise be mixed with the mineral binder composition together with the mixing water without any pre-mixing.

According to yet further embodiments an accelerator composition of the present invention is added to the mineral binder composition shortly after the mixing water, preferably in a continuous manner as described above.

The process for the acceleration of a mineral binder composition as described above may additionally comprise one or more steps of dosing, of conveying, and/or of placing a mineral binder composition and/or of a mineral binder composition mixed with an accelerator of the present invention and/or mixed with water.

The mineral binder composition and the accelerator composition, in form of their constituents or in form of pre-mixes, e.g. a dry mix, and the mixing water are usually dosed in pre-defined amounts through at least one dosing device, for example a conveyor belt or screw conveyor, which is able to convey the desired amount of the constituents in mass or volume in the desired speed to a mixer. It is especially preferred, that there are two separated dosing devices, with the first dosing device being integrated into a mixer, and the second dosing device being integrated into a dispensing equipment, for example a nozzle. By this, an especially steady conveying of the mixture as well as a flexible adjustment of the hardening mineral binder composition is possible.

In the mixing device, which may be static or dynamic or a combination of both, the mineral binder composition is mixed with the accelerator composition of the present invention and/or with water, and the fresh mix is conveyed through a dispensing equipment, for example a nozzle, and is placed at a pre-defined position. A paste-like consistency of the accelerator composition as well as of the mineral binder composition after mixing with water is advantageous for an easy conveying of the material to and through the mixing and dispensing equipment, for example a nozzle. These are especially important properties for the use in an automated process, for example by a robotic system.

The placing of the mineral binder composition as described above can be done in an automated process, for example by a robotic system. A robotic system typically places the mineral binder composition in several layers in a process also known as additive manufacturing. A mineral binder composition of the present invention can thus be used in additive manufacturing. In another aspect, the present invention thus relates to the use of an accelerator composition as described above in methods of additive manufacturing, especially with concrete or mortar.

It is advantageous for the use in a method of additive manufacturing for a mineral binder composition mixed with the accelerator composition of the present invention when leaving the mixer, to be still in a plastic state, so that it is formable by the dispensing equipment, for example a nozzle. It is furthermore advantageous for a mineral binder composition mixed with the accelerator composition of the present invention when leaving the mixer to be non-sagging and self-supporting and to have sufficient yield stress and/or fast development of compressive strength. The accelerated mixture can thus support the next layers of freshly mixed and accelerated mineral binder composition, which are applied on top after a short period of time.

In yet another aspect, the present invention relates to the use of an accelerator composition as described above for the coating of substrates, preferably of surfaces of tunnels, mines, excavations, bays, wells, and drains, especially with sprayed concrete or sprayed mortar.

In yet another aspect the present invention relates to the use of an accelerator composition as described above in free forming applications, especially with sprayed concrete or sprayed mortar.

According to preferred embodiments, the uses as described above refer to concrete or mortars which are free of pozzolanic materials. This means that mineral binder compositions used therein are free of pozzolanic materials. "Free of" in this context means that the amount of pozzolanic materials is lower than 1 wt.-%, preferably lower than 0.5 wt.-%, especially lower than 0.1 wt.-%, each based on the total weight of the mineral binder composition. The present invention therefore also relates to the use of an accelerator composition as described above to accelerate a mortar or concrete which is free of pozzolanic material.

A mineral binder composition accelerated with an accelerator composition of the present invention can be brought into a desired shape and cured to produce hardened articles. These can be for example pre-cast elements as well as an edifice or a part of a building

In yet another aspect the present invention therefore also relates to a hardened article whose hardening has been accelerated by an accelerator for mineral binder compositions, the accelerator comprising
a) aluminium sulfate,
b) at least one pozzolane,
c) optionally at least one defoamer, and
d) water.

The following working examples illustrate the invention. The examples are not intended to limit the scope of the invention in any way.

### Examples

### Preparation of accelerator mixtures A1 - A3

An accelerator **A1** according to the present invention was prepared by mixing 14.5 parts by mass of Al₂(SO₄)₃, 3.9 parts by mass of Al(OH)₃, 1.3 parts by mass of Mg(OH)₂, 4 parts by mass of formic acid, and 41.1 parts by mass of water. This mixture was stirred at 70 °C for 2h and then cooled to 23 °C. 31.4 parts by mass of metakaolin and 3.8 parts by mass of a defoamer (ethoxylated 2,4,7,9-tetramethyl-5-decyn-4,7-diol) were then added and the resulting suspension was vigorously mixed until homogeneous.

An accelerator **A2** which is not according to the present invention was prepared by mixing 45 parts by mass of Al₂(SO₄)₃, 12 parts by mass of Al(OH)₃, 4 parts by mass of Mg(OH)₂, and 12.5 parts by mass of formic acid in 26.5 parts by mass of water. This mixture was stirred at 70 °C for 2h and then cooled to 23 °C.

An accelerator **A3** which is not according to the present invention was prepared by mixing 14.5 parts by mass of Al₂(SO₄)₃, 3.9 parts by mass of Al(OH)₃, 1.3 parts by mass of Mg(OH)₂, 4 parts by mass of formic acid, and 62.5 parts by mass of water. This mixture was stirred at 70 °C for 2h and then cooled to 23 °C. 10 parts by mass of metakaolin and 3.8 parts by mass of a defoamer (ethoxylated 2,4,7,9-tetramethyl-5-decyn-4,7-diol) were then added and the resulting suspension was vigorously mixed until homogeneous.

### Dry mortar preparation

A dry mortar composition was prepared by intermixing 20 parts by mass of Portland cement (CEM I 52.5), 8.4 parts by mass of fine calcium carbonate filler, 47.8 parts by mass of silica sand (0.1 - 0.3 mm), 4 parts by mass of metakaolin, 1.4 parts by mass of calcium sulphoaluminate cement, 18.3 parts by mass of GGBFS, and 0.1 parts by mass of synthetic polymer powder for 1 minute at 23°C and 50% relative humidity in a Hobart mixer.

### Preparation of cementitious compositions

A cementitious composition **C1** according to the present invention was prepared by mixing 100 g of the above dry mortar composition with 1 g of a polycarboxylate ester (PCE), 0.5 g of a defoamer, 3 g of the accelerator **A1** and 12 g of water. Mixing was done for 2 minutes at 23°C and 50% relative humidity in a Hobart mixer.

A reference composition **R1,** which is not according to the invention, was prepared in the same way as **C1** without the addition of any accelerator **A1. R1** is thus free of accelerator.

A reference composition **R2,** which is not according to the invention, was prepared in the same way as **C1.** However, instead of adding 3g of the accelerator **A1,** 1g of non-inventive accelerator **A2** were added.

Another reference composition **R3,** which is not according to the invention, was prepared in the same way as R2. However, an additional 0.94 wt.-%, relative to the total dry weight of the mortar, of metakaolin were added to the dry mortar. The total content of metakaolin of reference composition **R3** was thus the same as the total content of metakaolin of inventive example **C1.** The difference being that in **R3,** the whole metakaolin is contained in the mortar dry mix.

Still another reference composition **R4,** which is not according to the invention, was prepared in the same way as **C1.** However, instead of adding 3g of the accelerator **A1,** 3g of non-inventive accelerator **A3** were added.

The following table 1 shows an overview of the compositions of inventive example C1 and reference examples R1 - R4.

**Table 1 Example compositions**

| | **C1** | **R1** | **R2** | **R3** | **R4** |
|---|---|---|---|---|---|
| CEM I 52.5 | 20 g | 20 g | 20 g | 20 g | 20 g |
| CSA^{*1} | 1.4 g | 1.4 g | 1.4 g | 1.4 g | 1.4 g |
| GGBFS^{*2} | 18.3 g | 18.3 g | 18.3 g | 18.3 g | 18.3 g |
| Fine CaCO₃^{*3} | 8.4 g | 8.4 g | 8.4 g | 8.4 g | 8.4 g |
| Silica sand^{*4} | 47.8 g | 47.8 g | 47.8 g | 47.7 g | 47.8 g |
| Metakaolin^{*5} | 4g | 4g | 4g | 4.94 g | 4 g |
| RDP^{*6} | 0.1 g | 0.1 g | 0.1 g | 0.1 g | 0.1 g |
| PCE^{*7} | 1 g | 1 g | 1 g | 1 g | 1 g |
| Water | 12 g | 12 g | 12 g | 12 g | 12 g |
| Defoamer^{*8} | 0.5 g | 0.5 g | 0.5 g | 0.5 g | 0.5 g |
| Accelerator | 3g A1 | none | 1g A2 | 1g A2 | 3g A3 |

| | | | | | |
|---|---|---|---|---|---|
| ^{*1} calcium sulfoaluminate cement (Denka CSA 20) ^{*2} ground granulated blast furnace slag (Blaine specific surface: 2'452 m²/kg, activity index acc. EN 15167-1: 41%, methylene blue value: <1.67 g/kg) ^{*3} ground calcium carbonate (purity: 99.3%, BET surface: 10 m²/g, particle size distribution: D98: 5 µm, D50: 0.8 µm) ^{*4} silica sand with particle size 0.1 - 0.3 mm ^{*5} < 0.02 wt.-% residue on 325 mesh; Chapelle index 1'000 mgCa(OH)₂/g (according to NF P18-513:2012) ^{*6} Starvis S5514F (available from BASF) ^{*7} polycarboxylate ester with and a carboxylate / ester ratio of appr. 3, made from esterification of a polymethacrylate backbone(Mn = 7'000 g/mol) with a mix (weight ratio 1:3.5) of two methyl-terminated PEG with Mn = 1'000 g/mol and 3'000 g/mol respectively ^{*8} ethoxylated 2,4,7,9-tetramethyl-5-decyn-4,7-diol | | | | | |

### Performance testing

Compressive strength and flexural strength were measured according to DIN EN 196-1 on prisms of 40 x 40 x 160 mm after the time indicated in below table 2.

Linear shrinkage was measured according to EN 12617-4 on prisms of 40 x 40 x 160 mm within 5h and 16h of mixing with water.

The following table 2 shows the results.

**Table 2: Measurement results**

| **Example** | **C1** | **R1** | **R2** | **R3** | **R4** |
|---|---|---|---|---|---|
| Linear shrinkage after 5h [µm/m] | -496 | -82 | -687 | -564 | -4020 |
| Linear shrinkage after 16h [µm/m] | -742 | -722 | -856 | -824 | -4320 |
| Compressive strength after 24h [MPa] | 33 | 6 | 33 | 34 | n.m. |
| Compressive strength after 7d [MPa] | 53 | 60 | 46 | 45 | 53 |
| Flexural strength after 24h [MPa] | 5.4 | 1.1 | 5.5 | 4.9 | n.m. |
| Flexural strength after 7d [MPa] | 6.2 | 8.2 | 5.3 | 5.9 | n.m. |

| | | | | | |
|---|---|---|---|---|---|
| n.m.: not measured | | | | | |

From the above table 2 it becomes clear that composition C1, which is in accordance with the present invention, shows a faster strength development than compared to the reference R1 which was made without accelerator. The increase in strength development is similar or better as compared to the references R2 - R4. Additionally, the inventive composition C1 does show significantly lower shrinkage as compared to reference R2 (where no pozzolane was present in the accelerator), reference R3 (where the respective additional amount of pozzolane was added to the dry mortar), and reference R4 (where a lower amount of pozzolane was present in the accelerator).

## Claims

1. Accelerator composition for mineral binder compositions comprising
a) 5-16 wt.-%, preferably 7-15 wt.-%, more preferably 8-12 wt.-% of aluminium sulfate,
b) 16 - 65 wt.-%, preferably 20 - 55 wt.-%, especially 25 - 45 wt.-% of at least one pozzolane,
c) optionally at least one defoamer, and
d) at least 30 wt.-%, preferably at least 40 wt.-%, more preferably at least 50 wt.-% of water.

2. Accelerator composition according to claim 1, **characterized in that** it additionally comprises aluminium hydroxide.

3. Accelerator composition according to claim 1 or 2, **characterized in that** the molar ratio of aluminium to sulfate is from 0.5 - 2, preferably 0.67 - 1.35, in particular 0.7 - 1.0.

4. Accelerator composition according to any of the preceding claims, **characterized in that** the at least one pozzolane is selected from the group consisting of silica fume, fly ash, volcanic tuff, especially trass, diatomaceous earth, rice husk ash, and calcined clays, especially metakaolin.

5. Accelerator composition according to any of the preceding claims, **characterized in that** the particle size of the at least one pozzolane is from 0.1 - 100 µm, preferably from 0.1 - 50 µm, more preferably from 0.2 - 10 µm and that the D50 value is from 0.5 - 20 µm, especially from 1 - 5 µm.

6. Accelerator composition according to any of the preceding claims, **characterized in that** the at least one defoamer is selected from the group consisting of ethoxylated 2,4,7,9-tetramethyl-5-decyn-4,7-diol, a combination of fatty alcohol alkoxylate and polysiloxane, or a combination of a mineral oil and a silicone oil comprising hydrophobic silica.

7. Accelerator composition according to any of the preceding claims, **characterized in that** it is essentially free of alkali metals and/or chloride.

8. Accelerator composition according to any of the preceding claims, **characterized in that** it is in the form of a liquid suspension

9. Accelerator composition according to claim 8, **characterized in that** it has a viscosity of higher than 500 m Pa·s, preferably higher than 1'000 mPa·s at a shear rate of 1 s⁻ and at 23°C.

10. Accelerator composition according to any of the preceding claims, **characterized in that** it comprises or consists of
a) 7 - 16 wt.-%, preferably 9 - 15 wt.-%, especially 11 - 14 wt.-% of aluminium sulfate,
b) optionally 0.01 - 5 wt.-%, preferably 1 - 5 wt.-% of aluminium hydroxide,
c) 16 - 65 wt.-%, preferably 20 - 55, more preferably 25 - 45 wt.-%, especially 33 wt.-% of at least one pozzolane, preferably of metakaolin,
d) 30 - 80 wt.-%, preferably 30 - 65 wt.-% of water, and
e) 0.5 - 5 wt.-%, preferably 1 - 4 wt.-% of at least one defoamer.

11. Process for the acceleration of a mineral binder composition, comprising the steps of mixing a mineral binder with
a) an accelerator composition as claimed in any of claims 1-10, and
b) water
in any given order

12. Process as claimed in claim 11, **characterized in that** the process is a continuous process.

13. Process according to any of claims 11 - 12, **characterized in that** the accelerator composition is mixed with the at least one mineral binder composition in an amount of from 0.5 - 25 wt.-%, preferably 1 - 15 wt.-%, especially 3 - 10 wt.-%, each based on the total weight of the mineral binder.

14. Use of an accelerator composition according to any of claims 1 - 10 for the coating of substrates, preferably of surfaces of tunnels, mines, excavations, bays, wells, and drains, especially with sprayed concrete or sprayed mortar.

15. Use of an accelerator composition according to any of claims 1 - 10 in free forming applications, especially with sprayed concrete or sprayed mortar.

16. Use of an accelerator composition according to any of claims 1 - 10 in methods of additive manufacturing, especially with concrete or mortar.

17. Use of an accelerator according to any of claims 1 - 10 to accelerate a mortar or concrete which is free of pozzolanic material.
